# EUROPÄISCHE PATENTANMELDUNG

(11) **EP 2 298 528 A1**
(43) Veröffentlichungstag der Anmeldung: **23.03.2011**
(21) Anmeldenummer: 09011782.1
(22) Anmeldetag: 16.09.2009
(51) Int. Cl.: B29C 45/16

(54) **Dekorteil und Verfahren zur Herstellung eines Dekorteils**

(71) Anmelder: Quin GmbH, 71277 Rutesheim (DE)
(72) Erfinder: Weisser, Thomas, 75175 Pforzheim (DE); Friedrich, Uwe-Joachim, 76684 Östringen (DE); Zwiessler, Norbert, 97901 Altenbuch (DE); Bieniek, Klaus, 75438 Knittlingen (DE)
(74) Vertreter: Riedel, Peter

(57) **Zusammenfassung**

Die Erfindung betrifft ein Dekorteil (1) sowie ein Verfahren zur Herstellung eines solchen Dekorteiles (1), wobei das Dekorteil (1) eine Sichtseite (2) mit einer transparenten Deckschicht (4) und mit einer durch die Deckschicht (4) sichtbaren Dekorschicht (5) sowie eine Montageseite (3) mit einem Träger (6) aufweist. Die Dekorschicht (5) wird auf ihrer der Sichtseite (2) zugewandten Seite mit einer transparenten Folie (7) und auf ihrer der Montageseite (3) zugewandten Seite mit einer Sperrschicht (8) kaschiert. Die kaschierte Dekorschicht (4) wird zu einem Vorformling (9) umgeformt. Der Vorformling (9) wird zur Bildung der Deckschicht (4) mit einem transparenten Kunststoff (10) überspritzt und zur Bildung des Trägers (6) mit einem tragenden Kunststoff (11) hinterspritzt.

## Beschreibung

Die Erfindung betrifft ein Verfahren zur Herstellung eines Dekorteils sowie ein solches Dekorteil, insbesondere für den Innenraum eines Kraftfahrzeuges, wobei das Dekorteil eine Sichtseite mit einer transparenten Deckschicht, eine durch die Deckschicht sichtbare Dekorschicht sowie eine Montageseite mit einem Träger umfasst.

Dekorteile, wie sie insbesondere in Innenräumen von Kraftfahrzeugen eingesetzt werden, müssen hohen Anforderungen an ihre optische und haptische Qualität sowie auch an Maßhaltigkeit und Beständigkeit gegen Umwelteinflüsse genügen. Hierzu kommt verbreitet eine Bauweise zum Einsatz, bei der eine Dekorschicht, welche das optische Erscheinungsbild prägt, auf der Sichtseite des Dekorteils mit einer schützenden transparenten Deckschicht versehen ist. Auf der gegenüberliegenden Montageseite ist ein Träger bzw. eine Trägerschicht angeordnet, die dem Dekorteil die erforderliche Formstabilität verleiht und für die Befestigung des Dekorteils vorgesehen ist.

Die Ausbildung der transparenten Deckschicht aus Polyesteroder Polyurethan-Dickschichtlack erzeugt eine hohe Oberflächenqualität. Allerdings erfordert die Lackierung zahlreiche manuelle Nacharbeiten, was arbeits- und kostenintensiv ist. Außerdem neigt die Klarlackierung unter Einfluss von Licht und Temperatur zum Vergilben, was das optische Erscheinungsbild des Dekorteiles im Laufe der Zeit verschlechtert. Schrumpfungsprozesse können dazu führen, dass sich die nicht glatte Oberfläche einer strukturierten Dekorschicht nach und nach auf der Oberfläche der transparenten Deckschicht in unerwünschter Weise abbildet. Zur Vermeidung der vorgenannten Nachteile sind Dekorbauteile und entsprechende Herstellverfahren bekannt geworden, bei denen die transparente Deckschicht in Form eines transparenten Kunststoffs auf die Dekorschicht in einer Spritzgießform aufgespritzt wird. Der Nacharbeitsaufwand ist hierbei verringert. Die Qualität der sichtseitigen Oberfläche bleibt bei geeigneter Materialauswahl über einen längeren Zeitraum erhalten, da das spritzgegossene Kunststoffmaterial unempfindlicher gegen äußere Einflüsse ist.

Für einen qualitativ hochwertigen Spritzgießvorgang der transparenten Deckschicht sind hohe Spritzdrücke erforderlich, was die Materialauswahl der Dekorschicht einschränkt. Empfindliche Dekorschichten wie beispielsweise Dekorgewebe oder dgl. verschieben sich in der Spritzgießform unter Einwirkung des Spritzgießdruckes, was das Überspritzen der Sichtseite bisher unmöglich gemacht hat. Vielmehr musste bei empfindlichen Dekormaterialen auf eine Dickschichtlackierung mit den oben beschriebenen Nachteilen zurückgegriffen werden.

Das weiche und drapierfähige Gewebe lässt sich zwar gut in die gewünschte Form bringen, behält aber aufgrund seiner Nachgiebigkeit diese vorgesehene Form unter Einwirkung äußerer Lasten nicht bei. Dies hat die Ausführung als kostenintensives Handlaminat erforderlich gemacht.

Der Erfindung liegt die Aufgabe zugrunde, ein Verfahren zur Herstellung eines Dekorteiles anzugeben, mit dem auch empfindliche Dekorschichten bei hoher Wirtschaftlichkeit zu einem beständigen Dekorteil verarbeitet werden können.

Diese Aufgabe wird durch ein Verfahren mit den Merkmalen des Anspruchs 1 gelöst.

Des Weiteren liegt der Erfindung die Aufgabe zugrunde ein Dekorteil anzugeben, welches leicht herstellbar und dabei dauerhaft beständig gegen äußere Einflüsse ist.

Diese Aufgabe wird durch ein Dekorteil mit den Merkmalen des Anspruchs 7 gelöst.

Es wird ein Verfahren zur Herstellung eines Dekorteiles sowie ein solches Dekorteil vorgeschlagen, wobei das Dekorteil eine Sichtseite mit einer transparenten Deckschicht und einer durch die Deckschicht sichtbaren Dekorschicht sowie eine Montageseite mit einem Träger aufweist. Nach dem erfindungsgemäßen Verfahren wird die Dekorschicht auf ihrer der Sichtseite zugewandten Seite mit einer transparenten Folie und auf ihrer der Montageseite zugewandten Seite mit einer Sperrschicht kaschiert. Die kaschierte Dekorschicht wird zu einem Vorformling umgeformt, der anschließend zur Bildung der Deckschicht mit einem transparenten Kunststoff überspritzt und zur Bildung des Trägers mit einem tragenden Kunststoff hinterspritzt wird. Es entsteht ein Dekorteil, bei dem zwischen der Deckschicht und der Dekorschicht eine transparente Folie angeordnet ist, und bei dem zwischen dem Träger und der Dekorschicht eine Sperrschicht angeordnet ist.

Die Kaschierung der Dekorschicht mit einer transparenten Folie und auf der gegenüberliegenden Seite mit einer Sperrschicht erlaubt es, auch empfindliche, für sich alleine genommen wenig formstabile Materialien wie insbesondere Dekorgewebe oder ein Holzfurnier zu einem Vorformling umzuformen, der als solcher eine hinreichende Eigenstabilität hat, um in eine Spritzgießform eingelegt und dort mit Kunststoff umspritzt zu werden. Die transparente Folie verhindert außerdem, dass das Dekorgewebe, das Holzfurnier oder ein anderes empfindliches Dekormaterial in direkten Kontakt mit dem auf der Sichtseite aufgespritzten transparenten Kunststoff gerät. Die erzielte Abschirmung einerseits und die durch die Folie erzeugte Formstabilität andererseits verhindert, dass sich das Dekorgewebe oder das Holzfurnier während des Spritzgießvorganges verschiebt, reißt oder in anderer Weise beschädigt bzw. optisch beeinträchtigt wird. Gleichzeitig verhindert die auf der Montageseite vorgenommene Kaschierung mit einer Sperrschicht, dass der dort hinterspritzte tragende Kunststoff in das Dekorgewebe oder ein anderes empfindliches Dekormaterial eindringt oder sogar durchschlägt. Insgesamt entsteht ein qualitativ hochwertiges Dekorteil, welches mit hoher Prozesssicherheit und ohne nennenswerten Nacharbeitungsaufwand hergestellt werden kann, und welches aufgrund seiner allseitigen Umspritzung seine erstklassigen optischen und haptischen Eigenschaften selbst unter extremen Temperatur- und Lichtbelastungen über einen langen Zeitraum beibehält.

Die transparente Folie ist vorteilhaft aus einem thermoplastischen Kunststoff, insbesondere aus Polycarbonat (PC), Polymethylmethacrylat (PMMA), Polyvinylbutyral (PVB), thermoplastisches Elastomer (TPE), bevorzugt thermoplastisches Polyurethan (TPU), oder aus einem Verbund der vorstehenden Materialen gebildet.

Die Sperrschicht kann ebenfalls als Folie insbesondere aus den vorstehenden Materialien ausgebildet sein und ist bevorzugt ein Vlies mit einem thermisch aktivierbaren Haftvermittler insbesondere in Form eines Trockenleimfilmes.

Die vorstehend genannten Materialen für die transparente Folie und die Sperrschicht erlauben in vorteilhafter Weiterbildung des Verfahrens, dass die Dekorschicht derart unter Druck, Temperatur und Zeit kaschiert und/oder die kaschierte Dekorschicht in gleicher Weise zu dem Vorformling umgeformt wird, dass die Folie und/oder die Sperrschicht, insbesondere der Haftvermittler des Vlieses angeschmolzen wird. Die angeschmolzene transparente Folie schmiegt sich in die strukturierte Oberfläche der Dekorschicht. Bei einem Dekorgewebe entsteht der optische Eindruck, als ob die Gewebestruktur mit einem transparenten Kunststoff durchtränkt sei. Bei einem Holzfurnier schmiegt sich die transparente Folie in die Holzmaserung hinein, so dass der optische Eindruck einer Klarlackierung entsteht. Das Anschmelzen der Sperrschicht bzw. des thermisch aktivierbaren Haftvermittlers erzeugt ebenso wie das Anschmelzen der sichtseitigen transparenten Folie einen innigen Haftverbund mit der Dekorschicht. Nach dem Erkalten und dem damit einhergehenden Erstarren verfügt der auf diese Weise hergestellte Vorformling über die nötige Formstabilität, um dem später einwirkenden Spritzdruck standzuhalten.

Bei einer Ausbildung der Sperrschicht in Form eines Vlieses wird zwar das Vlies selbst nicht angeschmolzen. Seine faserige Struktur erzeugt aber einen innigen Haftverbund mit dem hinterspritzten tragenden Kunststoff zur Ausbildung des Trägers. Die angeschmolzene transparente Folie nimmt zwar durch ihre Anschmiegung an das Dekormaterial dessen unebene Oberflächenstruktur an. Diese Unebenheiten werden jedoch durch die nachfolgende Überspritzung mit transparentem Kunststoff zur Bildung der transparenten Deckschicht ausgeglichen, so dass eine durch die Spritzgießform vorgegebene, insbesondere glatte Oberfläche entsteht, deren Oberflächenqualität dauerhaft erhalten bleibt.

Für die Ausbildung der transparenten Deckschicht kommen verschiedene spritzgießfähige Kunststoffe wie in der Form reagierende.und aushärtende Thermo- oder Duroplaste in Betracht. Bevorzugt ist die Deckschicht aus einem nicht reaktiven thermoplastischen Kunststoff, insbesondere aus Polymethylmethacrylat (PMMA) gebildet. Hierbei ist eine hohe Materialähnlichkeit mit der vorstehend beschriebenen transparenten Folie gegeben, die beim Spritzgießvorgang zu einem innigen und dauerhaften Materialverbund führt, und die aufgrund ihrer Materialähnlichkeit zu vernachlässigbaren Materialverspannungen und damit einhergehenden Verformungen führt. Maßhaltigkeit und Oberflächenqualität bleiben dauerhaft erhalten.

Ein Ausführungsbeispiel der Erfindung ist nachfolgend anhand der Zeichnung näher beschrieben. Es zeigen:
- Fig. 1: in einer perspektivischen Darstellung ein ebenes Dekormaterial mit einer sichtseitigen Folienka- schierung und einer montageseitigen Sperrschicht- kaschierung als Rohmaterial zur Bildung eines Vor- formlinges nach Fig. 2;
- Fig. 2: in perspektivischer Schemadarstellung einen aus dem Material nach Fig. 1 gebildeten Vorformling;
- Fig. 3: in schematischer Querschnittsdarstellung ein aus dem Vorformling nach Fig. 2 gebildetes Dekorteil mit einer aufgespritzten Deckschicht und einer hin- terspritzten Trägerschicht.

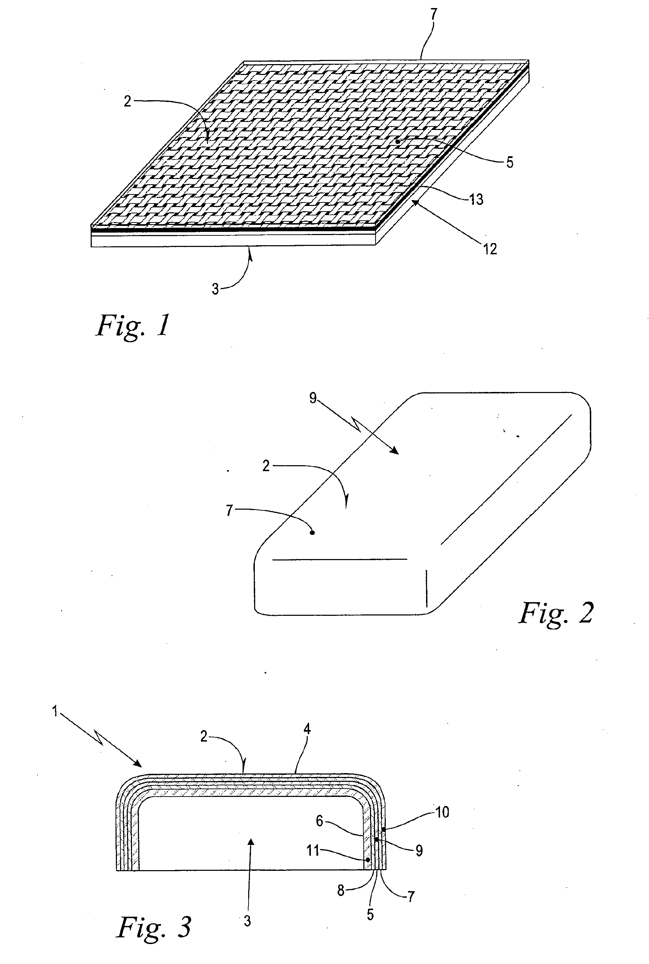

Fig. 1 zeigt in einer perspektivischen Schemadarstellung eine Dekorschicht 5 zur Herstellung eines Dekorteils 1 nach Fig. 3. Die Dekorschicht 5 ist im gezeigten Ausführungsbeispiel ein trockenes, nicht imprägniertes textiles Dekorgewebe am Beispiel eines Carbongewebes. Es kann aber auch ein Glas-, Kevlar- oder ein Mischgewebe sein. Außerdem kommen metallische Gewebe bzw. metallisierte Gewebe oder dgl. in Betracht. An Stelle eines Gewebes können auch andere textile Strukturen wie ein Gewirke, ein Vlies oder dgl. zweckmäßig sein. Für das erfindungsgemäße Verfahren und das erfindungsgemäße Dekorteil 1 (Fig. 3) können auch Folien aus Metall oder Kunststoff, Elektrolumineszenz-Folien, und insbesondere Edelholzfurniere mit oder ohne Bedruckung in Form von Schriftzügen, Emblemen, grafischen Designs oder dgl. eingesetzt werden. Anstelle einer Bedruckung können auch funktionale oder dekorative Beschichtungen aus den vorgenannten Materialien in Form von Inlays, aufgeklebten bzw. aufkaschierten Elementen oder dgl. vorgesehen sein.

Die Dekorschicht 5 ist auf ihrer der späteren Sichtseite 2 des in Fig. 3 dargestellten Dekorteils 1 zugewandten Seite mit einer transparenten Folie 7 kaschiert. Für die Ausbildung der transparenten Folie 7 kommen verschiedene Kunststoffmaterialien in Frage. Insbesondere eignet sich PC, PMMA, PVB, TPE und hier bevorzugt TPU, oder ein Verbund aus den vorstehenden Materialen.

Der für die Folie 7 gewählte Begriff transparent beinhaltet eine klarsichtige oder milchige Transparenz, Teiltransparenz, Transluzens und auch eine transparenten Einfärbung sowie verschiedene sinnvolle Kombinationen davon. Außerdem kann eine Ausrüstung der Folie 7 mit einem UV-Schutz oder dgl. zweckmäßig sein. Insbesondere bei einer transparenten Einfärbung der Folie 7 kann auf eine Vorfärbung der Dekorschicht 5 verzichtet werden. Die thermoplastische Folie 7 liegt bevorzugt in einem Dickenbereich von einschließlich 0,05 mm bis einschließlich 2,0 mm, insbesondere von einschließlich 0,1 mm bis einschließlich 0,4 mm.

Die Dekorschicht 5 ist darüber hinaus auf ihrer der Folie 7 bzw. Sichtseite 2 gegenüberliegenden, der späteren Montageseite 3 zugewandten Seite mit einer Sperrschicht 8 kaschiert, deren Funktion weiter unten im Zusammenhang mit Fig. 3 näher beschrieben ist. Zur Ausbildung der Sperrschicht 8 kann eine Folie entsprechend der oben beschriebenen Folie 7 gewählt werden. Neben den vorgenannten Materialien kommen dabei für eine solche Folie insbesondere Materialien aus der ABS(Acrylnitrilbutadienstyrol)-Gruppe, vorteilhaft eine PC-ABS(Polycarbonat-Acrylnitrilbutadienstyrol)-Folie in Betracht. Bevorzugt ist die Sperrschicht 8 entsprechend dem Ausführungsbeispiel nach Fig. 1 ein Vlies 12, welches zumindest auf seiner der Dekorschicht 5 zugewandten Seite mit einem thermisch aktivierbaren Haftvermittler 13 versehen ist. Der thermisch aktivierbare Haftvermittler 13 ist im gezeigten Ausführungsbeispiel als Trockenleimfilm ausgestaltet. Es können aber auch andere Haftvermittler zweckmäßig sein.

Die Kaschierung der Dekorschicht 5 mit der transparenten Folie 7 und der Sperrschicht 8 erfolgt bevorzugt in ebener, flächiger Form, wozu an das spätere Dekorteil 1 (Fig. 3) angepasste vorkonfektionierte Zuschnitte verwendet werden können. Hierbei wird bevorzugt eine Flachpresse eingesetzt. Es kann aber auch eine Kaschierung über Kalander unter Verwendung von endlosem Rollenmaterial für die Dekorschicht 5, die Folie 7 und die Sperrschicht 8 zweckmäßig sein. Die Kaschierung der Dekorschicht 5 wird derart unter Einwirkung von Druck, Temperatur und Zeit vorgenommen, dass die Folie 7 angeschmolzen wird. Unter Verzicht auf einen Haftvermittler schmiegt sich die angeschmolzene, erweichte Folie 7 an bzw. in die Oberflächenstruktur der Dekorschicht 5 und geht mit dieser einen innigen Haftverbund ein. Darüber hinaus erfolgt beim Kaschieren auch ein Anschmelzen der Sperrschicht 8. Sofern die Sperrschicht 8 als Folie entsprechend der transparenten Folie 7 ausgestaltet ist, gilt hierfür das vorstehend Beschriebene. Bei der Verwendung des hier gezeigten Vlieses 12 wird zwar nicht das Vlies 12, wohl aber dessen thermisch aktivierbarer Haftvermittler 13 angeschmolzen, wodurch auch hier nach dem Erstarren ein inniger Haftverbund zwischen der transparenten Folie 7 und der Sperrschicht 8 entsteht.

Der Druck beim Kaschieren liegt vorteilhaft in einem Bereich von einschließlich 0,1 N/mm² bis einschließlich 5 N/mm² und bevorzugt in einem Bereich von einschließlich 1 N/mm² bis einschließlich 2 N/mm². Die beim Kaschieren einwirkende Temperatur liegt vorteilhaft im Bereich zwischen einschließlich Raumtemperatur und einschließlich 250°C und bevorzugt in einem Bereich zwischen einschließlich 100°C und einschließlich 160°C. Die Zeit für den Kaschiervorgang liegt zweckmäßig in einem Bereich zwischen einschließlich 30 sek. und einschließlich 600 sek. und bevorzugt in einem Bereich von einschließlich 70 sek. bis einschließlich 150 sek.. Es kann aber auch zweckmäßig sein, beim Kaschieren auf das Anschmelzen der transparenten Folie 7 und der Sperrschicht 8 zu verzichten und stattdessen nur eine lockere Kaschierung außerhalb des vorstehenden Druck-, Temperatur- und Zeitbereiches vorzunehmen.

Die Gesamtschichtdicke der nach Fig. 1 kaschierten Dekorschicht 5 liegt bevorzugt in einem Bereich von einschließlich 0,1 mm bis einschließlich 2 mm, vorteilhaft in einem Bereich von einschließlich 0,3 mm bis einschließlich 0,7 mm und beträgt im gezeigten Ausführungsbeispiel etwa 0,5 mm.

Im Anschluss an den vorstehend beschriebenen Kaschiervorgang wird die mit der transparenten Folie 7 und der Sperrschicht 8 kaschierte Dekorschicht 5 nach Fig. 1 zu einem Vorformling 9 umgeformt, der schematisch in Fig. 2 dargestellt ist. Der Vorformling 9 entspricht in seiner Form im Wesentlichen dem späteren, in Fig. 3 dargestellten Dekorteil 1 und ist hier beispielhaft in Form einer nach unten offenen Halbschale mit gerundeten Ecken und gerundeten Kanten dargestellt. Natürlich können auch beliebige andere Formen gewählt werden. Zur Herstellung des Vorformlings 9 wird die kaschierte Dekorschicht 5 nach Fig. 1 in eine nicht dargestellte Pressform eingelegt, wobei die transparente Folie 7 auf der späteren Sichtseite 2 zu liegen kommt. In der Pressform wirken Druck, Temperatur und Zeit derart auf die kaschierte Dekorschicht 5 nach Fig. 1 ein, dass die kaschierte Dekorschicht 5 zu dem Vorformling 9 nach Fig. 2 umgeformt wird. Insbesondere für den vorstehend beschriebenen Fall einer lockeren Kaschierung erfolgt die Umformung derart unter Druck, Temperatur und Zeit, dass die Folie 7 und/oder die Sperrschicht 8, insbesondere der Haftvermittler 13 des Vlieses 12 (Fig. 1) wie oben beschrieben angeschmolzen wird. Hierbei kann es zweckmäßig sein, die vorstehend beschriebenen Bereiche für Druck, Temperatur und Zeit zu wählen, so dass der gewünschte innige Materialverbund zwischen der Dekorschicht 5, der Folie 7 und der Sperrschicht 8 nach obiger Beschreibung entsteht. Es kann aber auch zweckmäßig sein, sowohl beim Kaschieren nach Fig. 1 als auch beim Umformen nach Fig. 2 ein Anschmelzen der Folie 7 und/oder der Sperrschicht 8 nach obigen Maßgaben zu erzeugen. In jedem Falle wird erreicht, dass nach dem Erkalten und Erstarren des angeschmolzenen Materials der auf diese Weise erzeugte Vorformling 9 formstabil wird und aus der Pressform zur Weiterverarbeitung entnommen werden kann.

Im abschließenden Verfahrensschritt wird der Vorformling 9 nach Fig. 2 in eine nicht dargestellte Spritzgießform für einen Zweikomponenten-Spritzgießvorgang eingelegt. Darin wird der Vorformling 9 sequenziell entsprechend der schematischen Querschnittsdarstellung nach Fig. 3 zur Bildung der Deckschicht 4 auf seiner durch die transparente Folie 7 vorgegebenen Sichtseite 2 mit einem transparenten Kunststoff 10 überspritzt und zur Bildung des Trägers 6 auf seiner durch die Sperrschicht 8 vorgegebenen Montageseite 3 mit einem tragenden Kunststoff 11 hinterspritzt. Es entsteht ein insgesamt fünfschichtiger Aufbau des Dekorteils 1, bei dem die äußerste Deckschicht 4 aus dem transparenten Kunststoff 10 die Sichtseite 2 bildet, während die innerste, aus dem tragenden Kunststoff 11 ausgeführte Schicht die Montageseite 3 mit einem Träger 6 bildet. Der Träger 6 ist hier beispielhaft als flächig über die gesamte Montageseite 3 verteilte Tragschicht ausgeführt und kann zusätzlich noch angeformte Montage- bzw. Halteelemente in Form von Haken, Rastnasen oder dgl. aufweisen. Außerdem kann eine Ausführung zweckmäßig sein, bei der anstelle einer flächig verteilten Trägerschicht ein nur lokal vorhandener Träger 6 angespritzt wird.

Die Temperaturführung beim Überspritzen der Folie 7 mit dem transparenten Kunststoff 10 ist derart gewählt, dass der transparente Kunststoff 10 mit der Folie 7 einen Schmelzverbund eingeht. Bei einer Ausführung der Sperrschicht 8 als Folie gilt das Gleiche auch für das Hinterspritzen mit dem tragenden Kunststoff 11. Bei der hier gezeigten Ausbildung der Sperrschicht 8 als Vlies 12 (Fig. 1) werden die Fasern des Vlieses nicht angeschmolzen. Allerdings wird das faserige Vlies 12 durch die Schmelze des tragenden Kunststoffes 11 derart durchdrungen, dass ein inniger, teils formflüssiger Haftverbund mit dem Vlies 12 (Fig. 1) und dadurch mit der Dekorschicht 5 entsteht. Die Sperrschicht 8 ist aber derart ausgebildet, dass die Schmelze des tragenden Kunststoffes 11 nicht durch die Dekorschicht 5 durchschießen kann.

Die Folie 7 hält - unterstützt durch die Sperrschicht 8 - die für sich alleine genommen nachgiebige Dekorschicht 5 derart in der durch den Vorformling 9 (Fig. 2) vorgegebenen Form, dass diese Form unter Einwirkung des Spritzdruckes beim Einspritzen des transparenten Kunststoffes 10 und des tragenden Kunststoffes 11 beibehalten wird. Insbesondere bei einer Ausgestaltung der Dekorschicht 5 als Dekorgewebe entsprechend der Darstellung nach Fig. 1 kann sich die Gewebestruktur nicht verschieben bzw. verziehen, so dass nach Beendigung des Zweikomponenten-Spritzvorganges und Entformung aus der nicht dargestellten Spritzgießform ein formgenaues Dekorteil 1 mit hoher optischer und mechanischer Qualität bei erstklassiger Alterungsbeständigkeit entsteht.

Die transparente Folie 7 ist derart an bzw. in die Oberflächenstruktur der Dekorschicht 5 geschmiegt, dass der optische Eindruck einer Durchtränkung mit klarsichtigem Kunststoff entsteht. Durch den aufgespritzten transparenten Kunststoff 10 wird die transparente Folie 7 von der Sichtseite 2 aus unsichtbar. Eine eventuell sich in der Folie 7 abbildende Oberflächenstrukturierung wird durch die in der Spritzgießform aufgespritzte transparente Deckschicht 4 ausgeglichen. Die an der Sichtseite 2 sich ausbildende Oberfläche der Deckschicht 4 fällt auch nach längerer Zeit und unter Einwirkung von Temperatur nicht nach, so dass die durch die Spritzgießform vorgegebene Oberfläche dauerhaft erhalten bleibt. Der insgesamt transparente Verbund aus der Deckschicht 4 und der Folie 7 führt zu einer ungehinderten optischen Erkennbarkeit der Dekorschicht 5 und das durch sie gebildete prägende Erscheinungsbild. Dieses Erscheinungsbild kann noch in oben beschriebener Weise durch transparente Einfärbung der Folie 7 und/oder der Deckschicht 4, durch Verwendung von Elektrolumineszenz-Folien, durch Aufdrucke, Inlays oder andere weiter oben beschriebene Maßnahmen angepasst werden.

## Patentansprüche

1. Verfahren zur Herstellung eines Dekorteiles (1), wobei das Dekorteil (1) eine Sichtseite' (2) mit einer transparenten Deckschicht (4) und mit einer durch die Deckschicht (4) sichtbaren Dekorschicht (5) sowie eine Montageseite (3) mit einem Träger (6) aufweist, umfassend folgende Verfahrensschritte:
- Die Dekorschicht (5) wird auf ihrer der Sichtseite (2) zugewandten Seite mit einer transparenten Folie (7) und auf ihrer der Montageseite (3) zugewandten Seite mit einer Sperrschicht (8) kaschiert;
- Die kaschierte Dekorschicht (4) wird zu einem Vorformling (9) umgeformt;
- Der Vorformling (9) wird zur Bildung der Deckschicht (4) mit einem transparenten Kunststoff (10) überspritzt und zur Bildung des Trägers (6) mit einem tragenden Kunststoff (11) hinterspritzt.

2. Verfahren nach Anspruch 1,
**dadurch gekennzeichnet, dass** die Dekorschicht (5) durch ein Dekorgewebe oder ein Holzfurnier gebildet wird.

3. Verfahren nach Anspruch 1 oder 2,
**dadurch gekennzeichnet, dass** die Dekorschicht (5) mit einer transparenten thermoplastischen Folie (7) insbesondere aus PC, PMMA, PVB, TPE, bevorzugt TPU, oder aus einem Verbund der vorstehenden Materialien kaschiert wird.

4. Verfahren nach einem der Ansprüche 1 bis 3,
**dadurch gekennzeichnet, dass** die Dekorschicht (5) mit einer Sperrschicht (8) in Form eines Vlieses (12) mit einem thermisch aktivierbaren Haftvermittler (13) insbesondere in Form eines Trockenleimfilmes kaschiert wird.

5. Verfahren nach einem der Ansprüche 1 bis 4,
**dadurch gekennzeichnet, dass** die Dekorschicht (4) derart unter Druck, Temperatur und Zeit mit der transparenten Folie (7) und der Sperrschicht (8) kaschiert wird, dass die Folie (7) und/oder die Sperrschicht (8)., insbesondere der Haftvermittler (13) des Vlieses (12) angeschmolzen wird.

6. Verfahren nach einem der Ansprüche 1 bis 5,
**dadurch gekennzeichnet, dass** die kaschierte Dekorschicht (4) derart unter Druck, Temperatur und Zeit zu dem Vorformling (9) umgeformt wird, dass die Folie (7) und/oder die Sperrschicht (8), insbesondere der Haftvermittler (13) des Vlieses (12) angeschmolzen wird.

7. Dekorteil insbesondere für den Innenraum eines
Kraftfahrzeuges, umfassend eine Sichtseite (2) mit einer transparenten Deckschicht (4) und mit einer durch die Deckschicht (4) sichtbaren Dekorschicht (5) sowie eine Montageseite (3) mit einem Träger (6),
**dadurch gekennzeichnet, dass** zwischen der Deckschicht (4) und der Dekorschicht (5) eine transparente Folie (7) angeordnet ist, und dass zwischen dem Träger (5) und der Dekorschicht (5) eine Sperrschicht (8) angeordnet ist.

8. Dekorteil nach Anspruch 7,
**dadurch gekennzeichnet, dass** die Dekorschicht (5) ein Dekorgewebe oder ein Holzfurnier ist.

9. Dekorteil nach Anspruch 7 oder 8,
**dadurch gekennzeichnet, dass** die transparente Folie (7) aus einem thermoplastischen Kunststoff, insbesondere aus PC, PMMA, PVB, TPE, bevorzugt TPU, oder aus einem Verbund der vorstehenden Materialien gebildet ist, und/oder dass die Sperrschicht (8) ein Vlies (12) mit einem thermisch aktivierbaren Haftvermittler (13) insbesondere in Form eines Trockenleimfilmes ist.

10. Dekorteil nach einem der Ansprüche 7 bis 9,
**dadurch gekennzeichnet, dass** die Deckschicht (4) aus einem thermoplastischen Kunststoff, insbesondere aus PMMA gebildet ist.
